# EUROPÄISCHE PATENTSCHRIFT

(11) **EP 1 886 889 B1**
(45) Veröffentlichungstag und Bekanntmachung des Hinweises auf die Patenterteilung: **18.05.2011**
(21) Anmeldenummer: 07013335.0
(22) Anmeldetag: 07.07.2007
(51) Int. Cl.: B60T 17/22, F16D 66/02, B62L 3/02

(54) **Hydraulische Bremsanlage mit Verschleisssensor für Zweiräder**
Hydraulic braking device with wear sensor for two-wheelers
Dispositif de freinage hydraulique avec capteur d'usure pour véhicules à deux roues

(30) Priorität: 04.08.2006 DE 102006036415
(43) Veröffentlichungstag der Anmeldung: 13.02.2008
(60) Teilanmeldung: 09006153.2
(73) Patentinhaber: Gustav Magenwirth GmbH & Co. KG, 72574 Bad Urach (DE)
(72) Erfinder: Künstle, Reiner, 72555 Metzingen/Neuhausen (DE); Ruckh, Stefan, 72587 Römerstein/Zainingen (DE)
(74) Vertreter: Friese, Martin

(56) Entgegenhaltungen:
- DE-A1- 2 630 738
- DE-A1- 3 505 587
- DE-U1- 20 117 835
- GB-A- 2 204 371

## Beschreibung

Die Erfindung bezieht sich auf eine hydraulische Bremsanlage für Zweiräder, insbesondere Fahrräder, mit mindestens einer hydraulischen Betätigungsvorrichtung und einer am zu bremsenden Rad befindlichen, hydraulischen Bremsvorrichtung.

Eine hydraulische Bremsanlage für Fahrzeuge ist beispielsweise aus der GB 2 204 371 A bekannt. Diese Bremsanlage weist eine hydraulische Betätigungsvorrichtung mit einem Fußpedal auf. An der Betätigungsvorrichtung ist weiterhin ein Ausgleichsbehälter für Hydraulikflüssigkeit angeordnet. An den einzelnen Rädern sind hydraulische Bremsvorrichtungen angeordnet, die jeweils über eine Hydraulikleitung mit der Betätigungsvorrichtung verbunden sind.

Bei solchen hydraulischen Bremsanlagen kann zur Kontrolle der Bremsbeläge von Zeit zu Zeit eine Sichtkontrolle durchgeführt werden, die jedoch für den Nichtfachmann problematisch ist, da die Bremsbeläge durch Abrieb und Verschmutzung meist nicht so deutlich erkennbar sind, dass eine eindeutige Beurteilung des Belagszustands ohne Demontage der Bremszange möglich ist. Zur Kontrolle der Bremsbeläge im Fahrbetrieb wurden auch schon Versuche mit Kontrollsystemen unternommen, die eine Sensorik an der Bremsvorrichtung im Bereich des Bremsbelages aufweisen. Problematisch ist hierbei, dass in der Nähe der Bremsbeläge hohe Temperaturen, beispielsweise bis 180° C auftreten können, denen die Sensoren ausgesetzt und damit extrem hoch belastet sind. Sensoren für solche Umgebungstemperaturen sind teuer und störanfällig und damit das gesamte Überwachungssystem.

Aus der DE 26 30 738 ist beispielsweise eine hydraulische Bremsanlage bekannt, die eine Verschleißanzeige für die Bremsbeläge aufweist, die einfach ablesbar ist. Dazu ist in dem Ausgleichsbehälter ein Schwimmer angeordnet, der auf der Hydraulikflüssigkeit aufschwimmt und mit einem Anzeiger, der wenigstens teilweise aus dem Ausgleichbehälter herausragt, verbunden ist. Der Anteil des Anzeigers, der aus dem Ausgleichsbehälter herausragt ist direkt proportional zum Flüssigkeitsstand im Ausgleichbehälter. Aufgrund der automatischen Belagsnachstellung ist der Füllstand wiederum ein Indiz für den Bremsbelagsverschleiß. Problematisch dabei ist jedoch die Abdichtung der Öffnung im Ausgleichsbehälter, durch die der Anzeiger beweglich geführt ist.

Bei Fahrrädern, die häufig auch in extremen Schräglagen benutzt oder auch abgelegt werden, kann dadurch Hydraulikflüssigkeit austreten oder Schmutz in die Hydraulikflüssigkeit hinein gelangen. Beides kann zu einem Ausfall der Bremsfunktion führen.

Es besteht daher die Aufgabe, bei einer hydraulischen Bremsanlage der eingangs erwähnten Art eine Überwachungseinrichtung zur Kontrolle der Stärke der Bremsbeläge zu schaffen, welche betriebssicher, zuverlässig und kostengünstig ist, wobei auch während des Fahrbetriebs eine Kontrolle möglich ist.

Zur Lösung dieser Aufgabe schlägt die Erfindung vor, dass zur Anzeige der Abnahme der Bremsbelagsstärke eine Überwachungseinrichtung beabstandet zur Bremsvorrichtung vorgesehen ist und dass an einem Bewegungselement der Betätigungsvorrichtung ein Bewegungs- und/oder Durchflusssensor sowie eine damit verbundene Verschleißanzeige vorgesehen ist.

Unter Bewegungselement werden alle die Teile verstanden, die bei Betätigung_der Bremse betätigt werden. Dazu gehören der Bremshebel, der Geberkolben und sonstige damit verbundene Bewegungsteile sowie auch die Hydraulikflüssigkeit. Mit zunehmender Abnahme der Bremsbelagsstärke nimmt die Bewegung, also der Weg der Bewegungsteile beim Bremsen zu. Wird ein vorgebbarer Schwellwert Überschritten, kann dies angezeigt werden. Auch eine Zwischenanzeige des Bremsbelagsverschleißes ist möglich.

Eine Ausführungsform sieht vor, dass der Bewegungssensor zur Messung des Betätigungswegs an einem Bremshebel oder an einem Geberkolben der Betätigungsvorrichtung als Bewegungselement und die Verschleißanzeige zur Speicherung des jeweils vorhandenen Betätigungswegs ausgebildet sind.

Damit kann auf einfache Weise eine mechanische Verschleißüberwachung realisiert werden, wobei die Verschleißanzeige zur Speicherung des jeweils vorhandenen Betätigungswegs beispielsweise mittels eines Schlepphebels erfolgen kann, dessen Stellung die Verschleißsituation der Bremsbeläge wiedergibt.

Eine andere Ausführungsform sieht vor, dass der Durchflusssensor zur Messung des Durchflusses von Hydraulikflüssigkeit als Bewegungselement in der Betätigungsvorrichtung oder zwischen dieser und der Bremsvorrichtung und die Verschleißanzeige zur Speicherung des jeweils vorhandenen Durchflussvolumens bei Betätigung der Bremse ausgebildet sind. Dabei wird jeweils bei Betätigung der Bremse die Durchflussmenge an Hydraulikflüssigkeit innerhalb des Hydraulikwegs als Maß für den Betätigungsweg zum Beispiel des Bremshebels gemessen.

Die Bremsanlage weist zweckmäßigerweise ein mit Hydraulikflüssigkeit gefülltes, hydraulisches Gebersystem mit einem Geberkolben-Zylinder und einem darin geführten Geberkolben aufweist, wobei die Bremsvorrichtung einen in einem Bremszylinder geführten Bremskolben aufweist, der mittels in einer zum Bremszylinder gehörenden Druckkammer befindlichen Hydraulikflüssigkeit verstellbar ist zur Beaufschlagung eines Bremsbelages und wobei eine zum Geberkolben-Zylinder gehörende Geberkolben-Kammer hydraulisch mit der Druckkammer der Bremsvorrichtung verbunden ist.
Weist diese Bremsanlage eine automatische Bremsbelagsnachstellung auf, ist erfindungsgemäß eine Füllstandsanzeige für die im hydraulischen Gebersystem befindliche Hydraulikflüssigkeit vorgesehen, als Maß für die von der Bremsbelagsstärke abhängigen Volumenzunahme von Hydraulikflüssigkeit in der Bremsvorrichtungs-Druckkammer. Das mit abnehmender Bremsbelagsstärke zunehmende Füllvolumen der Druckkammer bewirkt also eine Abnahme der im angeschlossenen hydraulischen Gebersystem befindlichen Hydraulikflüssigkeit, was über eine Füllstandsanzeige detektiert und angezeigt werden kann.

Bei der erfindungsgemäßen Bremsanlage mit oder ohne automatischer Bremsbelagsnachstellung sind keine hitzbeständigen, teuren und anfälligen Sensoren im Bereich der Bremsbeläge zur Bremsbelagszustandskontrolle während des Fahrbetriebs erforderlich. Die erfindungsgemäße Bremsvorrichtung ist schon aus diesem Grund betriebssicherer und kostengünstiger.

Bevorzugt ist vorgesehen, dass die Bremsanlage einen Ausgleichsbehälter mit Hydraulikflüssigkeit aufweist, der mit der Geberkolben-Kammer und der Druckkammer hydraulisch verbunden ist, und dass zur Anzeige der Bremsbelagsstärke eine Füllstandsanzeige für die im Ausgleichsbehälter befindliche Hydraulikflüssigkeit vorgesehen ist.
Das Volumen der Druckkammer wird durch das Nachstellen des Bremskolbens zum Ausgleich der abnehmenden Belagsstärke vergrößert, wodurch nach Volumenaustausch mehr Hydraulikflüssigkeit von der Druckkammer aufgenommen wird, während in gleichem Maß der Füllstand der Hydraulikflüssigkeit im Ausgleichbehälter abnimmt. Der Füllstand im Ausgleichbehälter dient auf diese Weise als Maß für den Zustand beziehungsweise die Stärke der Bremsbeläge aber auch zur Überwachung des hydraulischen Systems auf Leckage.

Vorzugsweise weist die Bremsanlage mit der Druckkammer, der Geberkolben-Kammer und dem Ausgleichsbehälter ein luftdicht geschlossenes, hydraulisches System auf.
Dadurch kann über den durch die fehlende Hydraulikflüssigkeit im Ausgleichsbehälter entstehenden Unterdruck eine Füllstandsanzeige gesteuert werden.

Besonders vorteilhaft ist es, wenn der Ausgleichsbehälter eine elastische, membranartige Wandung aufweist, die in Abhängigkeit vom Hydraulikflüssigkeitsfüllstand unterschiedliche Lagen einnimmt und die Füllstandsanzeige bildet.
Die elastische Wandung des Ausgleichsbehälters kann durch einen Balg, insbesondere einen Faltenbalg mit einer Membrane gebildet sein, die in Abhängigkeit vom Hydraulikflüssigkeitsfüllstand unterschiedliche Lagen einnimmt.
Die Membrane kann bei abnehmendem Füllstand der Hydraulikflüssigkeit im Ausgleichsbehälter zum Beispiel eine zunehmende Konkavkrümmung oder auch eine abnehmende Konvexkrümmung zeigen. Als Füllstandsanzeige wäre aber auch eine Kolben/Zylinderanordnung möglich.

Um den Füllstand der Hydraulikflüssigkeit im Ausgleichsbehälter exakt messen zu können, ist es zweckmäßig, wenn am Ausgleichsbehälter wenigstens ein Sensor zur Detektierung der Position der beweglichen Membrane angeordnet ist. Dabei kann der Sensor ein induktiver oder kapazitiver Sensor oder ein Magnetsensor sein.
Die Sensorvorrichtung kann dabei derart aufgebaut sein, dass der Sensor außen- oder innenseitig des Ausgleichsbehälters angeordnet ist, während außen- oder innenseitig der beweglichen Membrane des Ausgleichsbehälters, dem Sensor zugeordnet, ein Geber, beispielsweise ein Magnet, angeordnet ist. Der Sensor ist zweckmäßigerweise mit einer Mess- und Auswerteeinrichtung verbunden, die eine Füllstandsanzeige ansteuert, beispielsweise LEDs.

Die Membrane kann zur Messung der Füllstandshöhe einen Signalgeber aufweisen, dessen Position, die sich in Abhängigkeit von der Lage der Membrane verändert, die Füllstandsanzeige bildet. Dies ist konstruktiv einfach und erfordert keine weiteren technischen Hilfsmittel, so dass diese Ausführungsform einer erfindungsgemäßen Vorrichtung eine hohe Betriebssicherheit aufweist und leicht zu montieren ist.

Zur vereinfachten Ablesbarkeit weist das Gehäuse sichtseitig eine Abdeckung mit einer Öffnung auf, wobei die Membrane einen vorzugsweise etwa stabförmigen Signalgeber aufweist, der die Öffnung nach außen hin überragt und wobei der Überstand des Signalgebers ein Maß für den Füllstand im Ausgleichsbehälter ist.

Da die Betätigungsvorrichtung der Hydraulikbremse in der Regel im Lenkerbereich des Zweirades angeordnet ist, ist es zweckmäßig, wenn der Ausgleichsbehälter im Bereich der Betätigungsvorrichtung angeordnet und vorzugsweise in ein Gehäuse integriert ist. Durch das Gehäuse ist die Füllstandsanzeige vor äußeren Einflüssen geschützt und die Anordnung im Bereich der Betätigungsvorrichtung ermöglicht ein leichtes Ablesen auch während des Fahrbetriebs.

Die Erfindung wird im folgenden anhand der in den Zeichnungen dargestellten Ausführungsbeispiele näher erläutert. Es zeigt in teilweise schematisierter Darstellung:
- Fig. 1: eine hydraulische Bremsanlage mit einer einen Bremshebel aufweisenden Betätigungsvorrichtung und einer über eine Hydraulikleitung angeschlossenen, im Schnitt dargestellten Bremsvorrichtung,
- Fig. 2: eine Betätigungsvorrichtung im Längsschnitt mit Ausgleichsbehälter, Geberkolben und Geberkolben-Zylinder sowie mit einem Sensor und einem Geber,
- Fig. 3: eine gegenüber Fig.2 vergrößerte Darstellung des im Längsschnitt dargestellten Ausgleichsbehälters mit Gehäuse und Sensor und Geber im Ausgleichsbehälter,
- Fig. 4 bis Fig. 6: einen Teil der Bremsvorrichtung mit in unterschiedlichen Positionen befindlichem Bremskolben sowie unterschiedlich abgenutzten Bremsbelägen,
- Fig. 7: eine Längsschnittansicht eines Ausgleichsbehälters mit einer Bremsbelag-Verschleißanzeige, die einen stabförmigen, eine Membrane berührenden Signalgeber aufweist,
- Fig. 8: eine Längsschnittansicht entsprechend Fig.7, hier jedoch mit zur Membrane beabstandetem Signalgeber bei abgenützten Bremsbelägen und minimalem Füllstand des Ausgleichsbehälters,
- Fig. 9: eine Längsschnittansicht eines Ausgleichsbehälters mit einem mit der Membrane verbundenen, stabförmigen Signalgeber bei maximaler Füllstandshöhe der Hydraulikflüssigkeit in dem Ausgleichsbehälter sowie
- Fig. 10: bei minimaler Füllstandshöhe der Hydraulikflüssigkeit in dem Ausgleichsbehälter,
- Fig. 11 und Fig. 12: etwa Fig.9 und Fig.10 entsprechende Ansichten, hier jedoch mit markierten Abschnitten am stabförmigen Signalgeber sowie an einem Schutzgehäuse für den Signalgeber,
- Fig. 13 und Fig. 14: Längsschnittansichten eines Ausgleichsbehälters mit einer Bremsbelag-Verschleißanzeige, die einen laschenförmigen Signalgeber aufweist, der in unterschiedlichen Stellungen gezeigt ist und
- Fig. 15 und Fig. 16: Längsschnittansichten eines Ausgleichsbehälters mit einer Bremsbelag-Verschleißanzeige, die einen Schwenkzeiger als Signalgeber aufweist, der in unterschiedlichen Stellungen gezeigt ist.

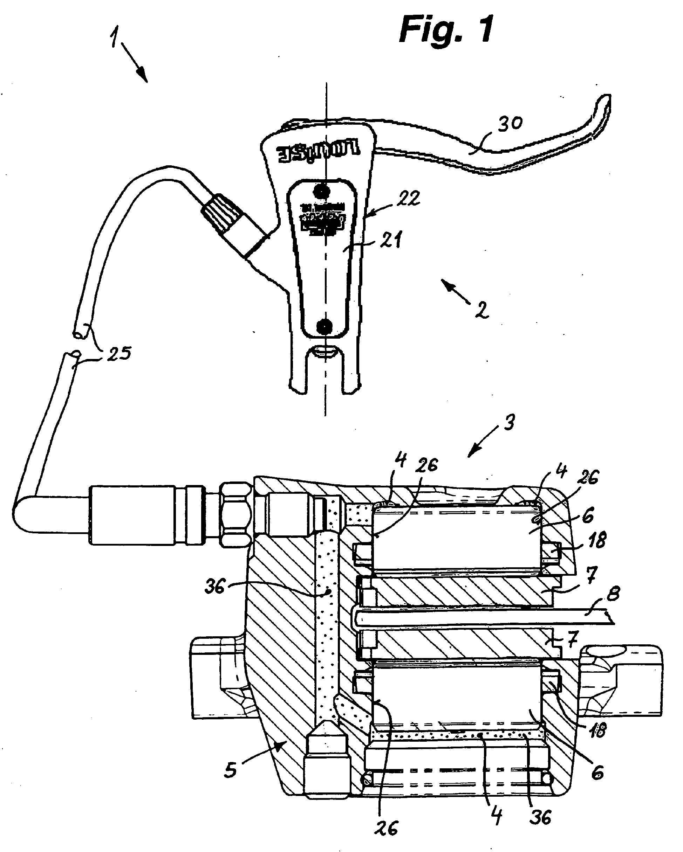

Fig.1 zeigt eine im Ganzen mit 1 bezeichnete hydraulische Bremsanlage für Zweiräder, insbesondere Fahrräder, mit einer Betätigungsvorrichtung 2 und einer damit über eine Hydraulikleitung 25 verbundenen Bremsvorrichtung 3.

Die Betätigungsvorrichtung 2 weist einen handbetätigbaren Bremshebel 30 auf, mit dem über ein hydraulisches Gebersystem Hydraulikflüssigkeit 36 über die Hydraulikleitung 25 zu der Bremsvorrichtung 3 gefördert werden kann.

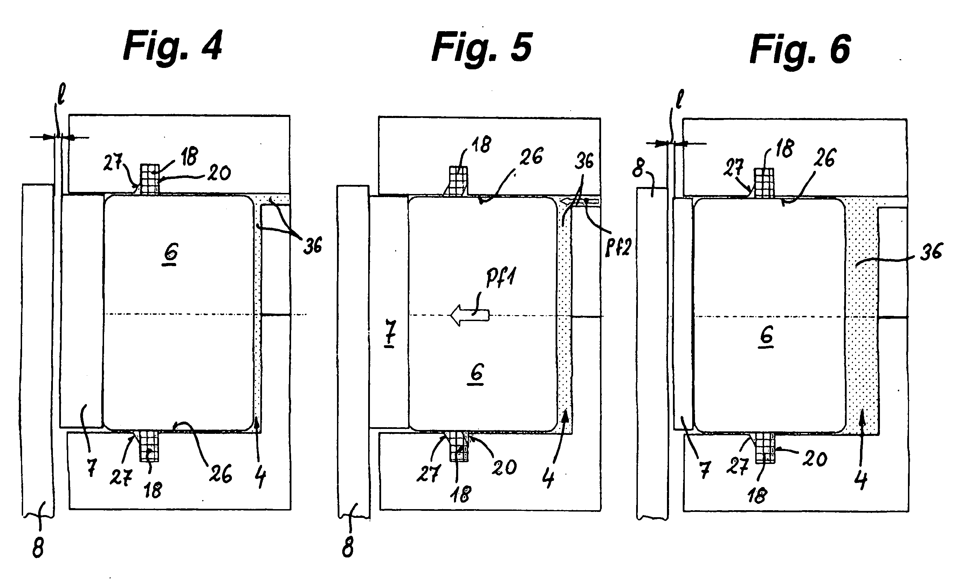

Die Bremsvorrichtung 3 weist eine Bremszange 5 auf, die an einer mit dem zu bremsenden Rad verbundenen Bremsscheibe 8 angeordnet ist. Die Bremsscheibe 8 wird beim Bremsen beidseitig mit zwei Bremsbelägen 7 beaufschlagt. Zum hydraulischen Verstellen der Bremsbeläge 7 sind in der Bremszange 5 in Bremszylindern 26 geführte, die Bremsbeläge 7 beaufschlagende Bremskolben 6 vorgesehen, die rückseitig von Hydraulikflüssigkeit 36 beaufschlagt werden, die sich in Druckkammern 4 befindet, welche an die Hydraulikleitung 25 angeschlossen und durch den rückwärtigen Teil der Bremszylinder 26 gebildet sind.
Die Bremskolben 6 sind, wie dies anhand der Figuren 4 bis 6 erkennbar ist, in den Bremszylindern 26 durch elastische Ringdichtungen 18 geführt, die in Ringnuten 20 mit einseitigen, den Bremsbelägen 7 zugewandten Anfasungen 27 eingesetzt sind und über welche die Bremskolben 6 in Längsrichtung beweglich gemäß dem Pfeil Pf1 gehalten sind. Dadurch ist eine automatische Bremsbelagsnachstellung gebildet.

Fig.4 zeigt einen Teil der Bremsvorrichtung in unbetätigtem Zustand, wobei sich der Bremskolben 6 in Ausrückstellung befindet und der Bremsbelag 7 um das Lüftspiel 1 gelüftet ist und Abstand zur Bremsscheibe 8 hat.
Entsprechend Fig.5 wird bei hydraulischer Druckbeaufschlagung des Bremskolbens 6 durch Zufuhr von Hydraulikflüssigkeit 36 in die Druckkammer 4 (Pfeil Pf2) der Bremskolben 6 in Richtung des Pfeiles Pf1 bewegt und drückt den Bremsbelag 7 gegen die Bremsscheibe 8. Dabei wird die Ringdichtung 18 elastisch in den Bereich der Anfasung 27 verformt. Bei Druckentlastung des Bremskolbens 6 sorgt die elastisch verformte Ringdichtung 18 für eine Rückstellung des Bremskolbens 6 und des damit verbundenen Bremsbelags 7 in die in Fig.4 gezeigte Stellung.

Solange der Verstellweg des Bremskolbens 6 nicht größer ist als die durch die Anfasung 27 begrenzte, elastische Verformbarkeit der Ringdichtung 18, wird der Bremskolben 6 durch die Ringdichtung 18 an der Kontaktstelle gehalten, ohne dass an der Kontaktstelle eine Relativbewegung auftritt. Wird jedoch durch Abnutzung des Bremsbelags 7 der notwendige Verstellweg des Bremskolbens 6 größer, rutscht der Bremskolben 6 bei in Verformungsanschlag-Stellung befindlicher Ringdichtung 18 durch, bis der Bremsbelag 7 an der Bremsscheibe 8 anliegt.
Durch diese automatische Bremsbelagsnachstellung bleibt das Lüftspiel 1 gleich, wie dies aus einem Vergleich von Fig. 4 mit neuem Belag und Fig.6 mit abgenütztem Belag deutlich erkennbar ist.
Mit abnehmender Belagstärke nimmt das Volumen der Druckkammer 4 zu, während im gleichen Maße die Füllmenge im angeschlossenen, hydraulischen Gebersystem abnimmt.

Dies wird im dargestellten Ausführungsbeispiel für die erfindungsgemäße Bremsbelag-Überwachungseinrichtung verwendet, indem das Füllvolumen im hydraulischen Gebersystem überwacht und angezeigt wird.

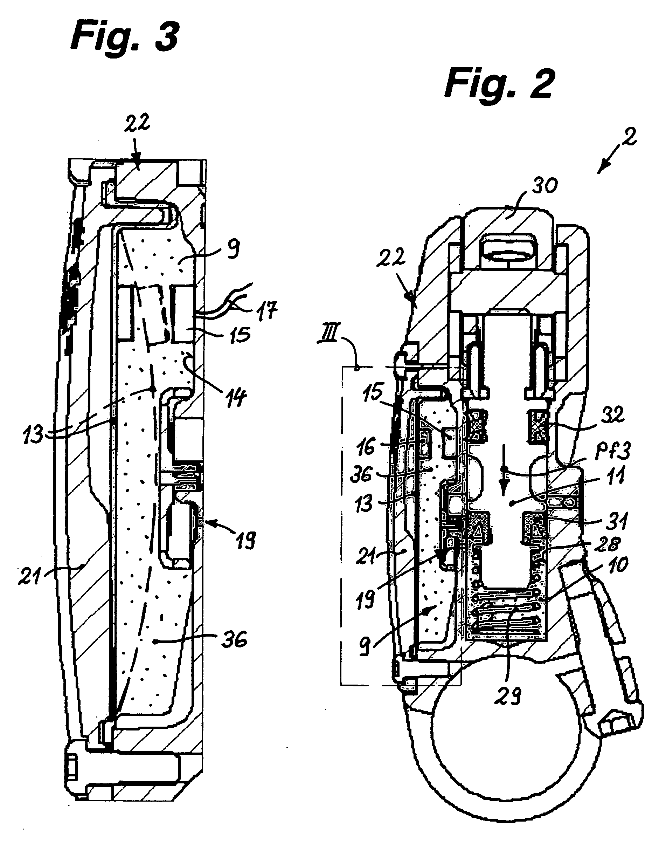

Das mit Hydraulikflüssigkeit 36 gefüllte, hydraulische Gebersystem mit der Betätigungsvorrichtung 2 weist, wie in Fig.2 erkennbar, einen Geberkolben-Zylinder 28 und einen darin geführten Geberkolben 11 auf, wobei ein Teil des Zylinder 28 eine Geberkolben-Kammer 10 bildet. In dieser ist eine den Geberkolben 11 in eine Ausgangslage bewegende Rückstellfeder 29 angeordnet. Mit dem Bremshebel 30 wird der Geberkolben 11 beim Bremsen in Richtung des Pfeils Pf 3 gegen die Rückstellkraft bewegt. Der Geberkolben 11 weist einen Dichtring 31 als Primärdichtung auf, die beim Betätigen der Bremse für den Druckaufbau in der Geberkolben-Kammer 10 sorgt. Außerdem ist eine weitere Ringdichtung 32 als Sekundärdichtung vorgesehen, die den hinter der Primärdichtung befindlichen, drucklosen Sekundärraum nach außen abdichtet und das Eindringen von Schmutz in das System verhindert.
An die Geberkolben-Kammer 10 ist (hier nicht erkennbar) die Hydraulikleitung 25 angeschlossen. Außerdem weist die Betätigungsvorrichtung 2 einen Ausgleichsbehälter 9 auf, der über einen Verbindungskanal 19 mit dem Geberkolben-Zylinder 28 beziehungsweise dessen Geberkolben-Kammer 10 verbunden ist. Die dem Zylinder 28 zugewandte Öffnung des Verbindungskanal 19 ist so angeordnet, dass bei unbetätigtem Geberkolben 11 und dementsprechender Position der Primärdichtung ein Volumenaustausch zwischen dem Ausgleichsbehälter 9 und der GeberkolbenKammer 10 ermöglicht ist. Bei Betätigung der Bremse und Verschieben des Geberkolben 11 in Richtung des Pfeils Pf 3 wird zunächst Hydraulikflüssigkeit aus der Kammer 10 in den Ausgleichsbehälter 9 gedrückt, bis die Öffnung des Verbindungskanal 19 von der Primärdichtung überfahren wird. Anschließend wird Hydraulikflüssigkeit von der Geberkolben-Kammer 10 über die Hydraulikleitung 25 in die Druckkammern 4 der Bremsvorrichtung 3 gepumpt. Die Bremskolben 6 verschieben die Bremsbeläge 7 und sobald diese an der Bremsscheibe 8 anliegen, wird Bremsdruck aufgebaut.
Wenn die Bremskolben 6 beim Betätigen aufgrund abgenützter Bremsbeläge 7 nachgestellt haben, entsteht beim Loslassen des Bremshebels 30 und dem Rückstellen des Geberkolbens 11 ein Unterdruck im Hydrauliksystem, da die Bremsanlage ein geschlossenes, hydraulisches System bildet. Dieser Unterdruck wird ausgeglichen, indem die Primärdichtung überströmt wird und gleichzeitig Hydraulikflüssigkeit aus dem Ausgleichsbehälter 9 in den Sekundärraum zwischen der Primärdichtung (Dichtring 31) und der Sekundärdichtung (Ringdichtung 32) nachströmt.

Das Ausführungsbeispiel gemäß Fig.3 zeigt den Ausgleichsbehälter 9 in vergrößerter Ansicht, der, wie auch in Fig.2 erkennbar, in ein Gehäuse 22 der Betätigungsvorrichtung 2 integriert ist.
Der Ausgleichsbehälter 9 hat eine elastische Wandung, die eine bewegliche Membrane 13 bildet und die in Abhängigkeit vom Hydraulikflüssigkeitsfüllstand unterschiedliche Lagen einnimmt. Es könnte für die bewegliche Membrane auch ein Balg, zum Beispiel ein Faltenbalg oder eine Kolben-Zylinderanordnung vorgesehen sein.
Zur Detektierung der Position der beweglichen Membrane 13 ist an dieser innenseitig ein Geber 16, beispielsweise ein Magnet angeordnet, der einem Sensor 15 an der gegenüberliegenden Innenseite 14 des Ausgleichsbehälters 9 zugeordnet ist. Im Ausführungsbeispiel sind sowohl der Geber 16 als auch der Sensor 15 innenseitig in dem Ausgleichsbehälter 9 angeordnet. Eine außenseitige Anordnung ist ebenfalls möglich mit dem Vorteil, dass eine einfachere, bedarfsweise auch nachträgliche Montage von Geber und Sensor an dem Ausgleichsbehälter 9 möglich ist und dass keine dichten Durchführungen der Sensorleitung 17 erforderlich sind.

Der Sensor 15 detektiert die Lage des Gebers 16, welche sich in Abhängigkeit von der Position der Membran 13 und damit vom Füllstand der Hydraulikflüssigkeit im Ausgleichsbehälter 9 verändert.
In Fig.3 ist der Geber 16 in zwei verschiedenen Positionen dargestellt. In der einen Position weist der Ausgleichsbehälter 9 einen maximalen Füllstand auf und dementsprechend hat der Geber 16 seinen größtmöglichen Abstand zu dem Sensor 15.
Diese Position der Membrane 13 stellt sich ein, wenn die Bremsbeläge 7 in Ordnung sind und ihre volle Stärke haben.
Mit fortschreitender Abnützung der Bremsbeläge 7 nimmt der Füllstand der Druckkammer 4 in der Bremsvorrichtung 3 durch das laufende, automatische Nachstellen der Bremskolben 6 zu und in gleichem Maß der Füllstand in dem Ausgleichsbehälter 9 ab, nachdem ein Flüssigkeitsausgleich zwischen Druckkammer 4, Geberkolbenkammer 10 und Ausgleichsbehälter 9 stattgefunden hat.
Strichliniert ist der Verlauf der Membrane 13 bei abgenützten Bremsbelägen 7 angedeutet, wobei der Abstand zwischen Sensor und Geber deutlich verringert ist.
Der Sensor 15 kann über die Sensorleitung 17 mit einer hier nicht dargestellten Mess- und Anzeigeeinrichtung verbunden sein, mittels der eine Auswertung des Sensorsignals und bei Überschreiten eines vorgebbaren Abnützungsgrads der Bremsbeläge 7 eine Warnsignalisierung erfolgen kann. Auch eine kontinuierliche Zustandsanzeige des Abnützungsgrads der Bremsbeläge 7 ist möglich.

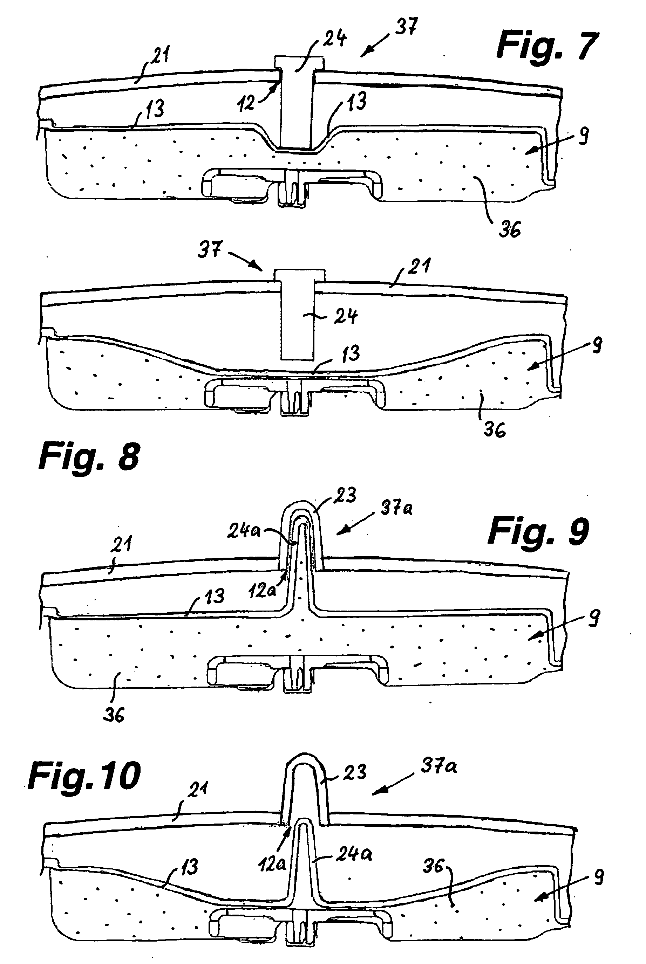

Im Ausführungsbeispiel gemäß Fig.7 und 8 ist ein Füllstandsanzeiger 37 vorgesehen, bei dem das Ausgleichsbehälter-Gehäuse 22 der Betätigungsvorrichtung 2 eine Abdeckung 21 mit einer Öffnung 12 aufweist, in die ein auf die Membrane 13 gerichtetes und diese bei ausreichendem Füllstand des Ausgleichsbehälters 9 berührendes, transparentes Einsatzteil als Signalgeber 24 eingesetzt ist (Fig.7).
Bei abgenutzten Bremsbelägen 7 und dementsprechend verringertem Füllstand von Hydraulikflüssigkeit in dem Ausgleichsbehälter 9 ist das innere Ende des transparenten Signalgebers 24 von der Membrane abgehoben, also beabstandet (Fig.8), so dass sich bei Betrachtung durch das transparente Einsatzteil in Richtung Membrane ein anderes Bild ergibt als bei auf der Membrane aufliegendem Signalgeber. Beispielsweise kann das Bild zwischen einem dunklen und einem hellen Fleck wechseln.

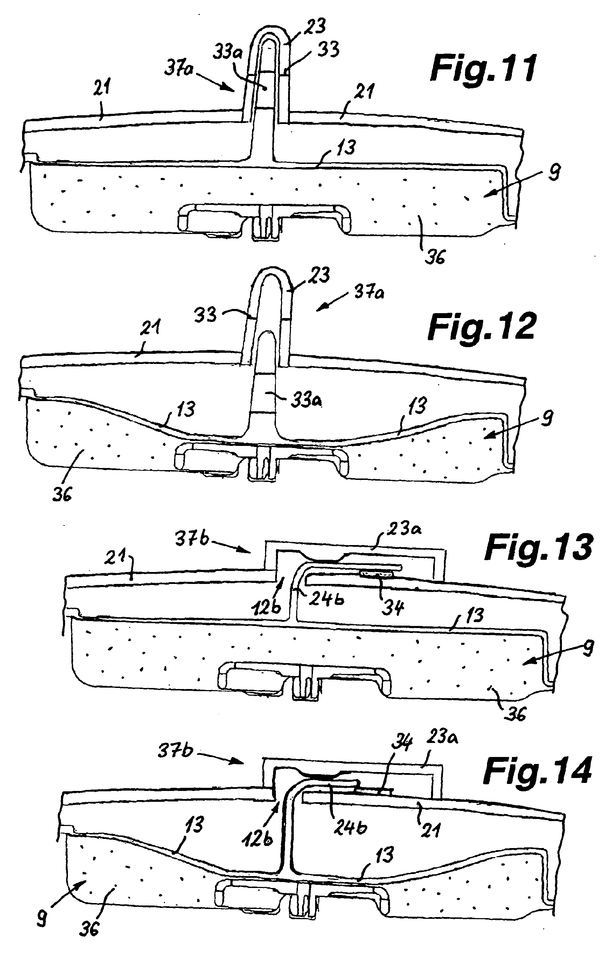

Im Ausführungsbeispiel gemäß Fig.9 und 10 ist ein Füllstandsanzeiger 37a vorgesehen, bei dem die sichtseitige Abdeckung 21 des Ausgleichsbehälter-Gehäuses 22 eine Öffnung 12a aufweist, welche von einem stabförmigen Signalgeber 24a nach außen hin überragt wird. Auf diese Weise ist der Überstand des mit der Membrane 13 verbundenen und hier durch eine Ausformung der Membrane 13 gebildeten Signalgebers 24a ein Maß für den Füllstand im Ausgleichsbehälter 9.
Die Öffnung 12a der Abdeckung 21 weist auf der Außenseite ein transparentes Schutzgehäuse 23 auf, in das der stabförmige Signalgeber 24a hineinragt. Auf diese Weise ist der Signalgeber geschützt.
Das Schutzgehäuse 23 und/oder der stabförmige Signalgeber 24a können, wie in den Figuren 11 und 12 gezeigt, Markierungen 33, 33a zur genaueren Kontrolle der Position des Signalgebers aufweisen.

Die Figuren 13 und 14 zeigen einen Füllstandsanzeiger 37b mit einem Ausgleichsbehälter 9 und einem Signalgeber 24b, der als flexible Lasche ausgebildet ist. Diese ist mit einem Ende an der Membrane 13 befestigt, durch eine Öffnung 12b in der Abdeckung 21 geführt und verläuft dann etwa parallel zur Außenseite der Abdeckung 21, geführt innerhalb eines Schutzgehäuses 23a.

Im Ausführungsbeispiel ist die Lasche bei maximalem Füllstand (Fig.13) des Ausgleichsbehälters 9 mit ihrem freien Endbereich über eine Markierung 34, vorzugsweise ein rotes Feld auf der Außenseite der Abdeckung 21, geführt und deckt dieses ab. Bei abgenutzten Bremsbelägen oder einem Leck im Hydrauliksystem wird das rote Feld sichtbar, weil der Signalgeber 24b bei einem niedrigen Füllstand des Ausgleichsbehälters 9 mit entsprechend abgesenkter Membrane 13 zurückgezogen wird, wie dies in Fig.14 erkennbar ist.

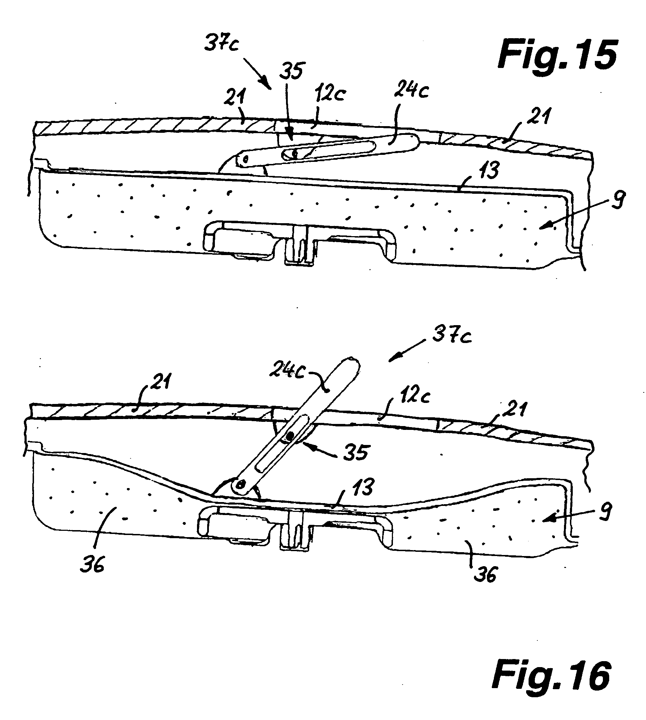

Die Figuren 15 und 16 zeigen ein weiteres Ausführungsbeispiel eines Füllstandsanzeigers 37c mit einer Bremsbelag-Verschleißanzeige an dem Ausgleichsbehälter 9 und einem als Schwenkzeiger ausgebildeten Signalgeber 24c, der mit einem Ende schwenkbar an der Membrane 13 und an der Innenwand des Gehäuses oder der Abdeckung 21 mittels einer Kulissenführung 35 geführt ist. Neben der zur Kulissenführung 35 gehörenden Lagerung des Schwenkzeigers an der Abdeckung 21 weist diese eine Öffnung 12c auf, durch die der sich abhängig von der Position der Membrane 13 aufstellbare Schwenkzeiger hindurchgreift.
Fig.15 zeigt die Stellung des Schwenkzeigers bei maximal gefülltem Ausgleichsbehälter 9 und dementsprechend in Ordnung befindlichen Bremsbelägen, während Fig.16 eine Warnsituation zeigt, bei der der als Schwenkzeiger ausgebildete Signalgeber 24c aufgestellt ist und über die Oberseite der Abdeckung übersteht.
Die erfindungsgemäße hydraulische Bremsanlage kann sowohl in Verbindung mit einer Scheibenbremse als auch mit einer Felgenbremse eingesetzt werden.

## Patentansprüche

1. Hydraulische Bremsanlage (1) für Zweiräder, insbesondere Fahrräder, mit mindestens einer hydraulischen Betätigungsvorrichtung (2) und einer am zu bremsenden Rad befindlichen, hydraulischen Bremsvorrichtung (3), wobei zur Anzeige der Abnahme der Bremsbelagsstärke eine Überwachungseinrichtung beabstandet zur Bremsvorrichtung (3) vorgesehen ist, **dadurch gekennzeichnet, dass** an einem Bewegungselement (30,11,36) der Betätigungsvorrichtung (2) ein Durchflusssensor sowie eine damit verbundene Verschleißanzeige vorgesehen ist.

2. Bremsanlage nach Anspruch 1, **dadurch gekennzeichnet, dass** der Durchflusssensor zur Messung des Durchflusses von Hydraulikflüssigkeit (36) als Bewegungselement in der Betätigungsvorrichtung (2) oder zwischen dieser und der Bremsvorrichtung (3) und die Verschleißanzeige zur Speicherung des jeweils vorhandenen Durchflussvolumens bei Betätigung der Bremse ausgebildet sind.

3. Bremsanlage nach Anspruch 1 oder 2, **dadurch gekennzeichnet, dass** die Bremsanlage mit der Druckkammer (4), der Geberkolben-Kammer (10) und dem Ausgleichsbehälter (9) ein luftdicht geschlossenes, hydraulisches System aufweist.

## Claims

1. A hydraulic braking system (1) for two-wheelers, in particular bicycles, comprising at least one hydraulic actuation device (2) and a hydraulic braking device (3) disposed at the wheel to be decelerated, a monitoring device being provided at a distance from the braking device (3) to display the decrease in the brake pad thickness, **characterized in that** a flow sensor and a wear indicator connected thereto are provided at a motion element (30, 11, 36) of the actuation device (2).

2. The braking system according to claim 1, **characterized by** designing the flow sensor for measuring the flow rate of hydraulic liquid (36) as a motion element in the actuation device (2) or between the latter and the braking device (3) and the wear indicator for storing the respectively available flow volume upon actuation of the brake.

3. The braking system according to claim 1 or 2, **characterized in that** the braking system forms an air-tight closed, hydraulic system with the pressure chamber (4), the master piston chamber (10) and the compensating reservoir (9).

## Revendications

1. Installation de freinage hydraulique (1) pour deux roues, en particulier pour bicyclette, comprenant au moins un dispositif d'actionnement hydraulique (2) et un dispositif de freinage hydraulique (3) qui se trouve sur la roue à freiner, dans laquelle il est prévu, pour afficher la diminution de l'épaisseur des garnitures de freinage, un système de surveillance écarté du dispositif de freinage (3), **caractérisée en ce qu'**il est prévu un capteur de débit sur un élément mobile (30, 11, 36) du dispositif d'actionnement (2), ainsi qu'un affichage d'usure relié à ce capteur.

2. Installation de freinage selon la revendication 1, **caractérisée en ce que** le capteur de débit destiné à la mesure du débit de liquide hydraulique (36) est réalisé sous forme d'un élément mobile dans le dispositif d'actionnement (2) ou bien entre celui-ci et le dispositif de freinage (3), et l'affichage d'usure est réalisé pour mémoriser le débit volumétrique respectivement présent lors de l'actionnement du frein.

3. Installation de freinage selon la revendication 1 ou 2, **caractérisée en ce que** l'installation de freinage comporte un système hydraulique fermé étanche à l'air avec la chambre à pression (4), la chambre (10) du piston émetteur, et le réservoir de compensation (9).
